# EUROPÄISCHE PATENTSCHRIFT

(11) **EP 0 432 127 B1**
(45) Veröffentlichungstag und Bekanntmachung des Hinweises auf die Patenterteilung: **29.09.1993**
(21) Anmeldenummer: 90890299.2
(22) Anmeldetag: 08.11.1990
(51) Int. Cl.: B60C 9/18

(54) **Festigkeitsträger für eine Gürtellage eines Gürtelverbandes eines Radialluftreifens und Radialluftreifen**
Belt reinforcement for radial pneumatic tyre
Renforcement pour ceintures de pneumatiques radiaux

(30) Priorität: 06.12.1989 AT 2771/89
(43) Veröffentlichungstag der Anmeldung: 12.06.1991
(73) Patentinhaber: Semperit Reifen Aktiengesellschaft, A-2514 Traiskirchen (AT)
(72) Erfinder: Lux, Friedrich, Dipl.-Ing., A-2700 Wiener Neustadt (AT)
(74) Vertreter: Vinazzer, Edith

(56) Entgegenhaltungen:
- EP-A- 0 357 826
- DE-A- 2 355 489
- DE-A- 2 458 275
- FR-A- 1 347 506
- FR-E- 30 414
- US-A- 4 165 403

## Beschreibung

Die Erfindung betrifft einen Festigkeitsträger für eine Gürtellage eines Gürtelverbandes eines Radialluftreifens und einen Radialluftreifen.

Bei herkömmlichen mehrlagigen Gürtelverbänden für Fahrzeugluftreifen werden als Festigkeitsträger Kordfäden, Metalldrähte und dgl. verwendet. Eine einzelne Gürtellage besteht aus derartigen in Gummi eingebetteten Festigkeitsträgern. Ein herkömmlicher Gürtelverband für PKW-Reifen weist beispielsweise zwei Stahlkordlagen auf, deren Korde bezüglich der Umfangsrichtung unter Winkeln von ca. +20°bzw. ca.-20° verlaufen. Durch diesen Gürtelverband soll die gewünschte Umfangs- bzw. Durchmesserfixierung des Reifens und die bei Seitenkraftbeanspruchung erforderliche Quersteifigkeit gewährleistet sein. Bei hohen Geschwindigkeiten ist jedoch der herkömmliche zwei- oder dreilagige Kreuzverbandgürtel nicht in der Lage, den Reifendurchmesser konstant zu halten, wodurch eine unerwünschte Umfangsvergrößerung auftritt. Um dieses Problem zu beseitigen wurde auch schon vorgeschlagen, eine oder mehrere zusätzliche Abdecklagen mit in ca.O°-Richtung verlaufenden Festigkeitsträgern aus Nylon oder Aramid vorzusehen.

Bei hohen Seitenkraftbeanspruchungen sind weiters die herkömmlichen Gürtelverbände zu wenig quersteif, um unerwünschte Verzerrungen und Verformungen im Bereich des Gürtels und des Laufstreifens zu verhindern.

Die DE-A-2 458 275 zeigt bereits einen Festigkeitsträger gemäß dem Oberbegriff des Anspruchs 1.

Hier setzt nun die Erfindung ein, der die Aufgabe zugrunde liegt, einen neuen Festigkeitsträger für Gürtellagen eines Gürtelverbandes eines Radialreifens sowie einen Radialreifen mit einem Gürtelverband vorzuschlagen, bei dem insbesondere die angesprochenen Probleme herkömmlicher Gürtelverbände hinsichtlich Quersteifigkeit in den Griff zu bekommen sind, und welcher darüber hinaus andere Eigenschaften, wie Fahrverhalten, Komfort, Rollwiderstand usw. nach Möglichkeit verbessern hilft.

Gelöst wird die gestellte Aufgabe durch die Merkmale des Anspruchs 1. Der erfindungsgemäße Fahrzeugluftreifen weist einen Gürtelverband auf, der sich aus zumindest einer Lage mit Festigkeitsträgern aus einem oder mehreren gestreckten Streckmaterialstreifen und zumindest einer Lage mit Festigkeitsträgern, die zumindest im wesentlichen in Umfangsrichtung verlaufen, aus Aramid, Nylon oder dgl., zusammensetzt.

Es wird somit nach der Erfindung ein völlig neuer Festigkeitsträger für den Gürtelverband eines Fahrzeugreifens vorgeschlagen, dessen ebenfalls erfindungsgemäße Anordnung im Gürtelverband eine Vielzahl von Vorteilen bzw. Verbesserungen mit sich bringt. So wird insbesondere eine sehr hohe Quersteifigkeit des Reifenverbandes im Gürtelbereich erzielt, was in einer merklichen Verbesserung des Fahrverhaltens und einer Vergleichmäßigung des Bodenaufstandsdruckes resultiert. Von Vorteil ist weiters, daß dem Gürtelverband eine gewisse Biegeweichheit in Umfangsrichtung verleiht wird, durch die einerseits der Rollwiderstand herabgesetzt wird und andererseits der Fahrkomfort verbessert wird. Die Erfindung läßt weiters eine gegenüber herkömmlichen Reifen mit Stahlkordgürteln merkliche Verringerung des Gesamtreifengewichtes zu. Im einfachsten Fall besteht der Gürtelverband lediglich aus einer Lage mit erfindungsgemäßen Festigkeitsträgern und einer einzigen weiteren 0°-Aramid- oder Nylonlage, die bei hohen Geschwindigkeiten den Reifendurchmesser konstant hält.

Bevorzugte Ausführungsvarianten von Schlitz- bzw. Einschnittformen sind in den Ansprüchen 2 bis 4 enthalten. Je nach verwendeter Gestalt läßt sich beim im Gürtelverband schließlich gestreckten Material sowohl die Quersteifigkeit als auch die Biegeweichheit in gewissen Bereichen beeinflussen. Das Streckmaterial kann als sehr dünne Folie mit einer Dicke von mindestens 0,06 mm bis zu einer Plattenform mit einer Dicke von maximal 2 mm eingesetzt werden.

Bevorzugte Materialien sind Aluminium, Aluminiumlegierungen, mit Messing beschichtetes Aluminium, Eisen, Eisenlegierungen, mit Messing beschichtetes Eisen und Kunststoffe. Im Gürtelverband des Fahrzeugluftreifens soll zur Erzielung einer ausreichenden Quersteifigkeit die Streckung des Streckmaterialstreifens mindestens 5 %, maximal 40 % und insbesondere ca. 20 % betragen.

Bevorzugt wird in der Gürtellage ein einziger in Umfangsrichtung umlaufender Streckmaterialstreifen eingesetzt.

Nach einer weiteren Ausführungsform kann auch eine Aneinanderreihung mehrerer, in Umfangsrichtung voneinander beabstandeter Streckmaterialstreifen erfolgen. Bei einer weiteren bevorzugten Ausführungsform wird ein einziger schmaler Streckmaterialstreifen in Umfangsrichtung auf die gewünschte Lagenbreite gewickelt.

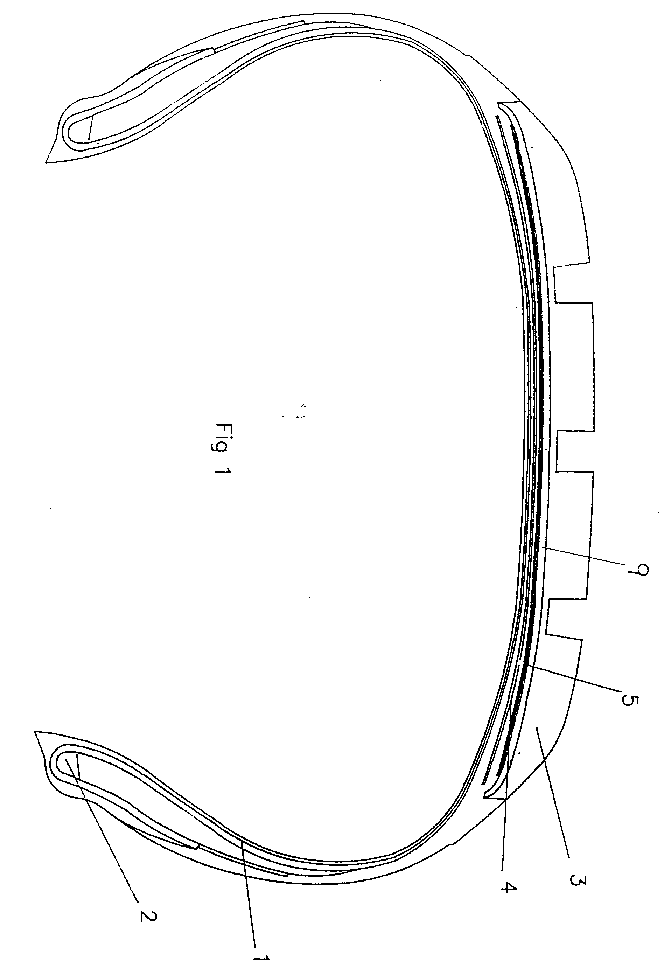

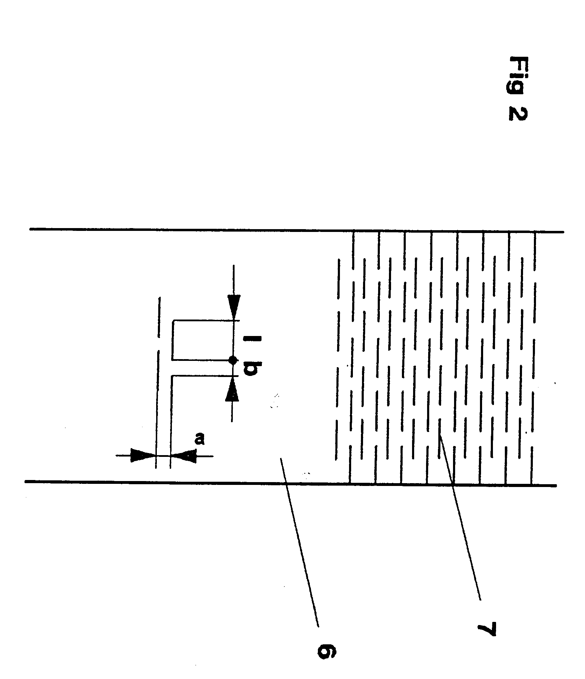

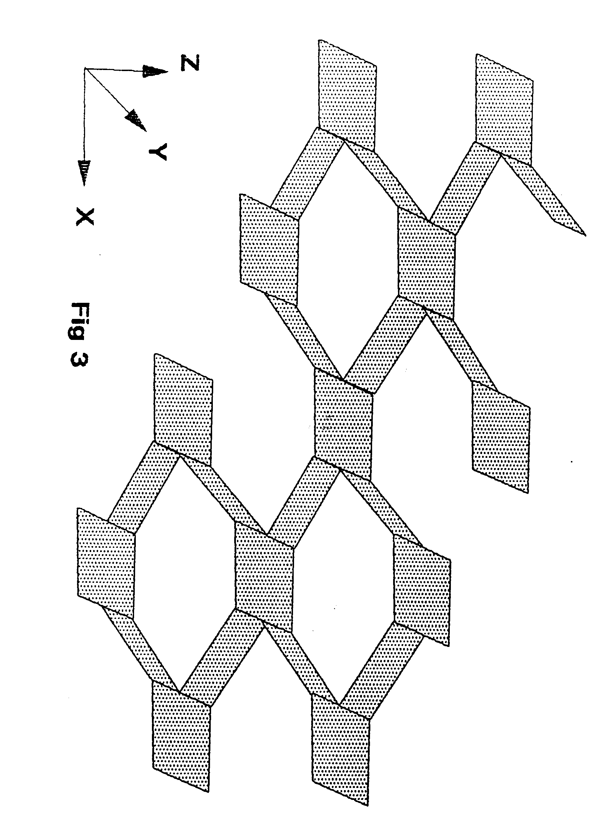

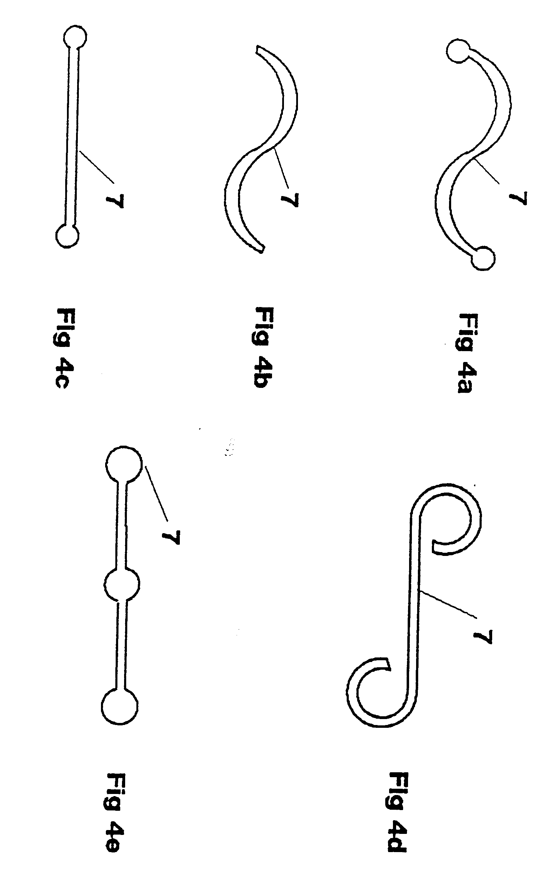

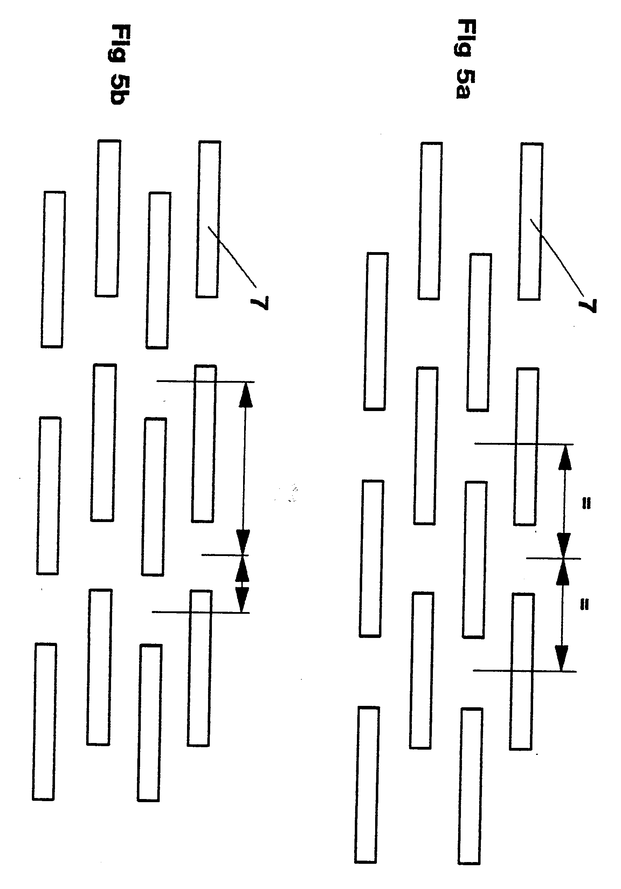

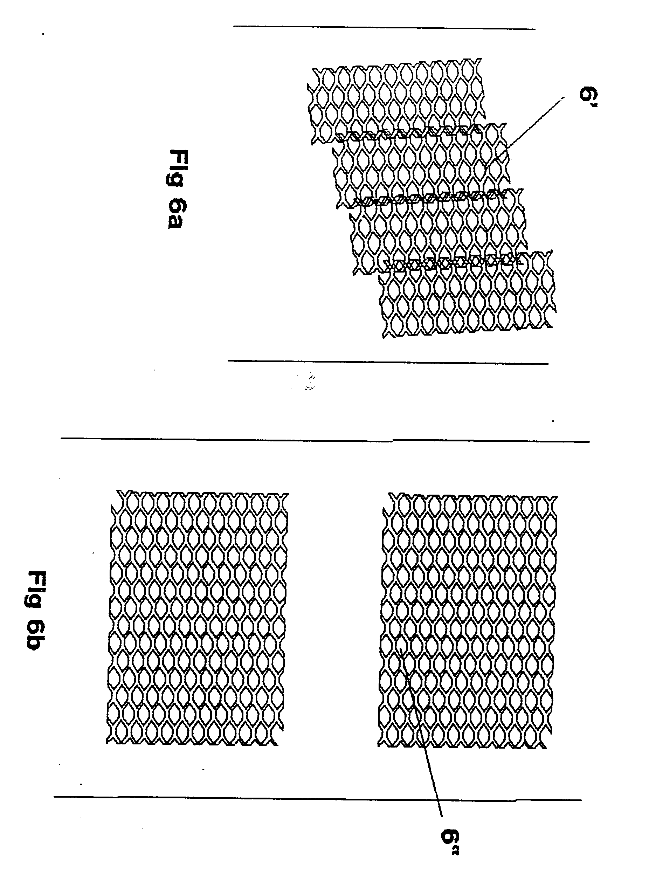

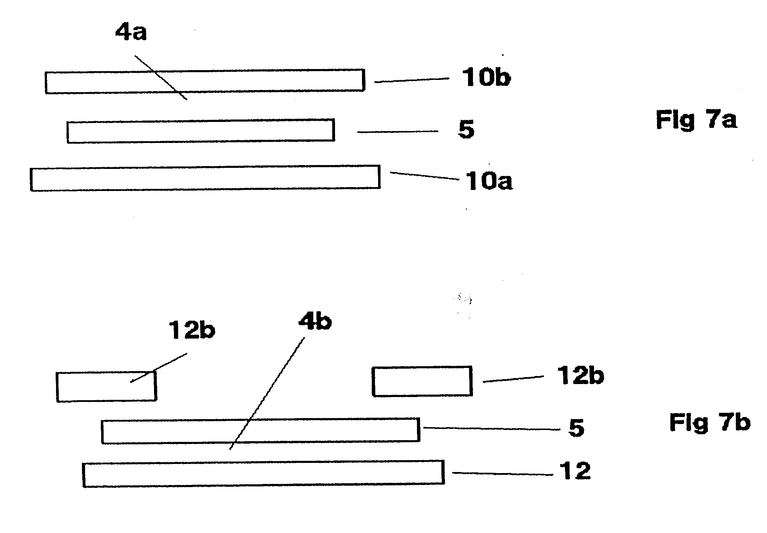

Weitere Merkmale, Vorteile und Einzelheiten der Erfindung werden nun anhand der Zeichnung, die mehrere Ausführungsbeispiele darstellt, näher beschrieben. Hiebei zeigt Fig. 1 einen Querschnitt durch einen Fahrzeugreifen mit einem erfindungsgemäß ausgestalteten Gürtelverband, Fig. 2 eine Draufsicht auf eine Ausführungsform eines erfindungsgemäßen Festigkeitsträgers im ungestreckten Zustand, Fig. 3 eine schematische Schrägansicht des Festigkeitsträgers gemäß Fig. 2, jedoch gestreckt, die Figuren 4a bis 4e weitere Ausführungsvarianten von Schlitz- bzw. Einschnittformen für einen erfinaungsgemäßen Festigkeitsträger, die Fig. 5a und 5b zwei Varianten der Anordnung der Schlitze bzw. Einschnitte, die Fig. 6a und 6b Ausführungsvarianten von Anordnungen von Versteifungseinlagen mit erfindungsgemäßen Festigkeitsträgern im Gürtelverband in Draufsicht und die Fig. 7a und 7b Ausführungsvarianten von Ausgestaltungen eines Gürtelverbandes schematisch im Querschnitt.

Fig. 1 zeigt den schematischen Aufbau eines Fahrzeugreifens mit einer in den Reifenkörper eingebetteten Karkasse 1, Wulstbereichen mit Wulstkernen 2, einem Laufstreifen 3 und einem zwischen diesem und der Karkasse 1 angeordneten dreilagigen Gürtelverband 4.

Die Lage 5 des Gürtelverbandes 4 enthält einen erfindungsgemäßen Festigkeitsträger, dessen Grundvariante nun anhand der Zeichnungsfiguren 2 und 3 erläutert wird. Der Festigkeitsträger besteht aus einem folien- oder plattenförmigen Streifen 6 aus einem sogenannten Streckmaterial. Fig. 2 zeigt diesen Streifen 6 unmittelbar nach der Herstellung, wo er mit einer Vielzahl von vorzugsweise regelmäßig angeordneten, geraden und parallel zueinander verlaufenden Schlitzen bzw. Einschnitten 7 versehen ist. Die Erstreckung der Schlitze 7, deren Gestalt sich durch Streckung schließlich ändert, ist grundsätzlich der Querrichtung zuzuordnen, wobei Abweichungen bis zu ca. 45° von der reinen Querrichtung möglich sind. Der Abstand a der Schlitze 7 wird in einem Bereich von 1,5 bis 10 mm gewählt, ebenso wie der Abstand b zwischen nebeneinander angeordneten Schlitzen 7. Die die Quererstreckung der Schlitze 7 bestimmende Länge 1 sollte in einem Bereich zwischen 10 und 25 mm liegen. Vorzugsweise vor der Gummierung wird der Streifen 6 um 5 bis 40 %, bevorzugt um ca. 20 %, gestreckt, so daß die in Fig. 3 ersichtliche dreidimensionale Struktur entsteht. Diese Struktur verleiht schließlich der Gürtellage 5 eine hohe Quersteifigkeit und gleichzeitig eine gewisse Biegeweichheit in Umfangsrichtung.

Als Streckmaterial eignen sich insbesondere Aluminium, Aluminiumlegierungen, mit Messing beschichtetes Aluminium, Eisen, Eisenlegierungen, mit Messing beschichtetes Eisen und auch Kunststoffe. Je nach Material wird die Streifendicke in einem Bereich zwischen 0,06 und 2 mm betragen.

Weitere Ausführungsvarianten von Schlitzformen sind den Figuren 4a bis 4e zu entnehmen. Gemäß Fig. 4a und 4b können die Schlitze 7 etwa S-förmig mit oder ohne auf geweitete Endbereiche gestaltet werden. Fig. 4c zeigt einen gerade verlaufenden Schlitz 7 mit aufgeweiteten Endbereichen. Nach Fig. 4d ist auch eine Ausführungsvariante möglich, wo ein im wesentlichen gerade verlaufender Schlitz umgebörtelte Endbereiche aufweist. Fig. 4e zeigt schließlich eine Variante, wo der in Fig. 4c dargestellte Schlitz mit einer zusätzlichen mittigen Aufweitung versehen ist. Innerhalb der Gürtellage 5 wird nun bevorzugt nur Material verwendet, welches gleiche Schlitzformen aufweist. Es ist jedoch durchaus möglich, innerhalb eines Streifens 6 unterschiedliche Schlitzformen miteinander zu kombinieren. Es ist günstig, wenn die Schlitzbreite, abgesehen von Aufweitungen oder dgl., in einem Bereich zwischen 0,5 und 2 mm gewählt wird. Wie schon erwähnt, können anstelle der Schlitze 7 auch Einschnitte angebracht werden, die somit keine nennenswerte Breite aufweisen.

Wie aus Fig. 5a ersichtlich ist, wird bevorzugt eine gegenseitige symmetrische Anordnung der Schlitze 7 gewählt werden. Fig. 5b zeigt eine Variante, bei der die gegenseitige Anordnung der Schlitze 7 asymmetrisch erfolgt.

Das gestreckte Material, wie es beispielsweise aus Fig. 3 ersichtlich ist, ist, wie es auch bei den herkömmlichen Gürtellagen üblich ist, in Kautschukmaterial eingebettet. Dazu können bekannte Verfahren, beispielsweise Walz-, aber auch Tauch- oder Sprühverfahren angewandt werden.

Der in Fig. 1 dargestellte erfindungsgemäße Gürtelverband 4 weist als zweite Gürtellage 9 eine 0°-Nylon- oder Aramidlage auf, durch die auch bei hohen Geschwindigkeiten der Reifendurchmesser konstant gehalten wird.

Das Streckmaterial ist in der Gürtellage 5 bevorzugt als Vollbandage enthalten. Bei der in Fig. 6a dargestellten Ausführungsvariante erfolgt ein mehrmaliges Wickeln eines schmalen Einzelstreifens 6' über den Reifenumfang. Hiebei kann eine Überlappung erfolgen. Fig. 6b zeigt eine Variante, bei der in der Gürtellage 5 in Umfangsrichtung aneinandergereihte, voneinander beabstandete Streckmaterialstreifen 6" verwendet werden.

In den Figuren 7a und 7b sind weitere bevorzugte Ausführungsvarianten der Ausgestaltung von Gürtelverbände unter Verwendung einer nach der Erfindung ausgestalteten Gürtellage dargestellt. Fig. 7a zeigt einen dreilagigen Gürtelverband 4a, dessen radial innerste Lage 10a eine 0°-Nylonlage, die zweite Gürtellage 5 gemäß der Erfindung gestaltet ist und die oberste Lage 10b eine 0°-Aramidlage ist. Beim Gürtelverband 4b gemäß Fig. 7b ist die radial innerste Lage 12 eine 0°-Aramidlage, die zweite Gürtellage 5 gemäß der Erfindung ausgeführt und als dritte Lage 12b eine aus zwei schulterseitig verlaufenden Streifen bestehende 0°-Nylonlage angeordnet.

Es wird darauf verwiesen, daß unter der Bezeichnung 0°-Lage auch jene Lagen zu verstehen sind, deren Festigkeitsträgerverlauf geringfügig von der 0°-Richtung (Umfangsrichtung) abweicht.

Es ist ferner selbstverständlich eine Vielzahl von Kombinationen einer erfindungsgemäßen Versteifungseinlage mit herkömmlichen Gürtellagen möglich.

## Patentansprüche

1. Festigkeitsträger hergestellt aus einem Folien- oder Plattenmaterial für eine Gürtellage eines Gürtelverbandes eines Radialluftreifens, wobei das Folien- oder Plattenmaterial mit einer Vielzahl von Schlitzen (7) oder Einschnitten versehen ist, dadurch gekennzeichnet, daß das Folien- oder Plattenmaterial nach Durchführung eines in der dem Reifenumfang entsprechenden Richtung zu erfolgenden Streckvorganges, welcher mit einer Aufweitung der Schlitze (7) bzw. Einschnitte einhergeht, in einer Gürtellage eingesetzt wird, wobei die Schlitze (7) oder Einschnitte im ungestreckten Zustand des Folien- oder Plattenmaterials unter einem Winkel zwischen O bis ca. 45° zur Querrichtung des Gürtelverbandes zu orientieren sind.

2. Festigkeitsträger nach Anspruch 1, dadurch gekennzeichnet, daß im ungestreckten Zustand des Folien- oder Plattenmaterials die Schlitze (7) oder Einschnitte zumindest im wesentlichen geradlinig ausgebildet sind.

3. Festigkeitsträger nach Anspruch 2, dadurch gekennzeichnet, daß die Schlitze (7) oder Einschnitte umgebogene und/oder aufgeweitere Endbereiche aufweisen.

4. Festigkeitsträger nach Anspruch 1, dadurch gekennzeichnet, daß im ungestreckten Zustand des Folien- oder Plattenmaterials die Schlitze (7) oder Einschnitte S-förmig gestaltet sind und gegebenenfalls aufgeweitere Endbereiche aufweisen.

5. Festigkeitsträger nach einem der Ansprüche 1 bis 4, dadurch gekennzeichnet, daß im ungestreckten Zustand des Folien- oder Plattenmaterials der Abstand (a) und der Abstand (b) zwischen benachbarten Schlitzen (7) oder Einschnitten 1,5 bis 10 mm beträgt.

6. Festigkeitsträger nach einem der Ansprüche 1 bis 5, dadurch gekennzeichnet, daß im ungestreckten Zustand des Folien- oder Plattenmaterials die durch die Quererstreckung bestimmte Länge (1) der Schlitze (7) oder Einschnitte 10 bis 25 mm beträgt.

7. Festigkeitsträger nach einem der Ansprüche 1 bis 6, dadurch gekennzeichnet, daß im ungestreckten Zustand des Folien- oder Plattenmaterials die gegenseitige Anordnung der Schlitze (7) oder Einschnitte asymmetrisch ist.

8. Festigkeitsträger nach einem der Ansprüche 1 bis 7, dadurch gekennzeichnet, daß die Dicke des Folien- oder Plattenmaterials mindestens 0,06 mm und bevorzugt bis zu 2 mm beträgt.

9. Festigkeitsträger nach einem der Ansprüche 1 bis 8, dadurch gekennzeichnet, daß das Folien- oder Plattenmaterial aus Aluminium, einer Aluminiumlegierung, mit Messing beschichtetem Aluminium, Eisen, einer Eisenlegierung, mit Messing beschichtetem Eisen oder einem Kunststoff besteht.

10. Radialluftreifen mit einem zumindest zweilagigen Gürtelverband, bei dem der Festigkeitsträger nach einem der Ansprüche 1 bis 9 eingesetzt ist, dadurch gekennzeichnet, daß sich der Gürtelverband (4, 4a, 4b) aus zumindest einer Lage mit einem oder mehreren gestreckten Folien- oder Plattenmaterialstreifen (6) und zumindest einer Lage mit Festigkeitsträgern, die zumindest im wesentlichen in Umfangsrichtung verlaufen, aus Aramid, Nylon oder dgl. zusammensetzt.

11. Radialluftreifen nach Anspruch 10, dadurch gekennzeichnet, daß die Streckung der Folien- oder Plattenmaterialstreifen (6) 5 bis 40 %, vorzugsweise ca. 20 % beträgt.

12. Radialluftreifen nach Anspruch 10 oder 11, dadurch gekennzeichnet, daß die gestreckte Folien- oder Plattenmaterial-Lage (5) des Gürtelverbandes (4) einen schmalen Streifen (6') aufweist, der über den Gürtelumfang mehrfach, gegebenenfalls mit gegenseitigen Überlappungsbereichen, gewickelt ist.

13. Radialluftreifen nach Anspruch 10 oder 11, dadurch gekennzeichnet, daß die gestreckte Folien- oder Plattenmaterial-Lage (5) des Gürtelverbandes (4) eine Anzahl von in Umfangsrichtung aneinandergereihten, voneinander beabstandeten Streifen (6") aufweist.

14. Radialluftreifen nach einem der Ansprüche 10 bis 13, dadurch gekennzeichnet, daß der Gürtelverband (4a) dreilagig ist, wobei die radial innerste Lage (10a) eine 0°-Nylonlage, die oberste Gürtellage (10b) eine 0°-Aramidlage und die mittlere Lage eine gestreckte Folien- oder Plattenmaterial-Lage (5) ist.

15. Radialluftreifen nach einem der Ansprüche 10 bis 13, dadurch gekennzeichnet, daß der Gürtelverband (4b) dreilagig ist, wobei die radial innerste Lage (12) eine 0°-Aramidlage, die zweite Gürtellage eine gestreckte Folien- oder Plattenmaterial-Lage (5) und die dritte Lage (12b) eine aus zwei schulterseitig verlaufenden Streifen bestehende 0°-Nylonlage ist.

## Claims

1. Reinforcing member, produced from a film or sheet material, for a belt ply of a belt binding of a pneumatic radial tyre, the film or sheet material being provided with a plurality of slots (7) or incisions, characterised in that the film or sheet material is inserted in a belt ply after a stretching operation has been carried out, such operation having to be effected in the direction corresponding to the tyre circumference and proceeding with an expansion of the slots (7) or incisions, the slots (7) or incisions having to be orientated at an angle of between O and approx. 45° relative to the transverse direction of the belt binding when the film or sheet material is in its unstretched state.

2. Reinforcing member according to claim 1, characterised in that the slots (7) or incisions are at least substantially rectilinear when the film or sheet material is in its unstretched state.

3. Reinforcing member according to claim 2, characterised in that the slots (7) or incisions have bent-over and/or expanded end regions.

4. Reinforcing member according to claim 1, characterised in that the slots (7) or incisions have an S-shaped configuration when the film or sheet material is in its unstretched state and optionally have expanded end regions.

5. Reinforcing member according to one of claims 1 to 4, characterised in that the spacing (a) and the spacing (b) between adjacent slots (7) or incisions are between 1.5 and 10 mm when the film or sheet material is in its unstretched state.

6. Reinforcing member according to one of claims 1 to 5, characterised in that the length (1) of the slots (7) or incisions is between 10 and 25 mm when the film or sheet material is in its unstretched state, such length being determined by the transverse extension.

7. Reinforcing member according to one of claims 1 to 6, characterised in that the mutual disposition of the slots (7) or incisions is asymmetrical when the film or sheet material is in its unstretched state.

8. Reinforcing member according to one of claims 1 to 7, characterised in that the thickness of the film or sheet material is at least 0.06 mm and is preferably up to 2 mm.

9. Reinforcing member according to one of claims 1 to 8, characterised in that the film or sheet material is formed from aluminium, an aluminium alloy, aluminium coated with brass, iron, an iron alloy, iron coated with brass, or a plastics material.

10. Pneumatic radial tyre, having at least a double-ply belt binding, wherein the reinforcing member according to one of claims 1 to 9 is inserted, characterised in that the belt binding (4, 4a, 4b) comprises at least one ply having one strip or a plurality of strips (6) formed from stretched film or sheet material and at least one ply having reinforcing members, which extend at least substantially in the circumferential direction, formed from aramide, nylon or the like.

11. Pneumatic radial tyre according to claim 10, characterised in that the stretching of the strips (6) of film or sheet material is 5 to 40 %, preferably approx. 20 %.

12. Pneumatic radial tyre according to claim 10 or 11, characterised in that the ply (5) of stretched film or sheet material of the belt binding (4) has a narrow strip (6'), which is wound several times over the belt circumference, possibly with mutual overlapping regions.

13. Pneumatic radial tyre according to claim 10 or 11, characterised in that the ply (5) of stretched film or sheet material of the belt binding (4) has a number of strips (6"), which are disposed in series with one another in the circumferential direction and are spaced apart from one another.

14. Pneumatic radial tyre according to one of claims 10 to 13, characterised in that the belt binding (4a) has three plies, the radially innermost ply (10a) being a 0° nylon ply, the uppermost belt ply (10b) being a 0° aramide ply, and the central ply being a ply (5) of stretched film or sheet material.

15. Pneumatic radial tyre according to one of claims 10 to 13, characterised in that the belt binding (4b) has three plies, the radially innermost ply (12) being a 0° aramide ply, the second belt ply (10b) being a ply (5) of stretched film or sheet material, and the third ply (12b) being a 0° nylon ply comprising two strips which extend at the shoulder end.

## Revendications

1. Renforcement fabriqué à partir d'un matériau en feuille ou en plaque pour un pli de nappe d'une ceinture ou nappe d'armature d'un pneumatique radial, le matériau en feuille ou en plaque étant muni d'une pluralité de fentes (7) ou d'encoches ou d'entailles, caractérisé en ce que le matériau en feuille ou en plaque selon la réalisation d'un procédé d'étirage à effectuer dans la direction correspondant à la périphérie du pneumatique, qui s'accompagne d'un élargissement de la fente (7) ou de l'entaille, est incorporé dans un pli de nappe, la fente (7) ou l'entaille devant être orientée à l'état non étiré du matériau en feuille ou en plaque selon un angle entre O jusqu'à environ 45° par rapport à la direction transversale de la ceinture.

2. Renforcement selon la revendication 1, caractérisé en ce qu'à l'état non étiré du matériau en feuille ou en plaque, la fente (7) ou l'entaille est conçue pour le moins dans l'essentiel de façon rectiligne.

3. Renforcement selon la revendication 2, caractérisé en ce que la fente (7) ou l'entaille présente des zones d'extrémité repliées et/ou élargies.

4. Renforcement selon la revendication 1, caractérisé en ce qu'à l'état non étiré du matériau en feuille ou en plaque, la fente (7) ou l'entaille est conçue en forme de S et présente éventuellement des zones d'extrémité élargies.

5. Renforcement selon l'une des revendications 1 à 4, caractérisé en ce qu'à l'état non étiré du matériau en feuille ou en plaque, la distance (a) et la distance (b) entre des fentes avoisinantes (7) ou des entailles sont de 1,5 jusqu'à 10 mm.

6. Renforcement selon l'une des revendications 1 à 5, caractérisé en ce qu'à l'état non étiré du matériau en feuille ou en plaque, la longueur (1) définie par l'étirement transversal de la fente (7) ou de l'entaille est de 10 à 25 mm.

7. Renforcement selon l'une des revendications 1 à 6, caractérisé en ce qu'à l'état non étiré du matériau en feuille ou en plaque, l'agencement réciproque de la fente (7) ou de l'entaille est asymétrique.

8. Renforcement selon l'une des revendications 1 à 7, caractérisé en ce que l'épaisseur du matériau en feuille ou en plaque est d'au moins 0,06 mm et de façon préférée jusqu'à 2 mm.

9. Renforcement selon l'une des revendications 1 à 8, caractérisé en ce que le matériau en feuille ou en plaque est réalisé en aluminium, en alliage d'aluminium, en aluminium revêtu de laiton, en fer, en alliage de fer, en fer revêtu de laiton ou en matière synthétique.

10. Pneumatique radial comportant une ceinture au moins à deux plis, dans laquelle le renforcement est incorporé selon l'une des revendications 1 à 9, caractérisé en ce que la ceinture (4, 4a, 4b) est composée par au moins un pli avec une ou plusieurs bandes de matériau en feuille ou en plaque (6) étiré et au moins un pli avec des renforcements en aramide, nylon ou matières analogues qui au moins pour l'essentiel s'étendent dans la direction périphérique.

11. Pneumatique radial selon la revendication 10, caractérisé en ce que l'étirement des bandes de matériau en feuille ou en plaque (6) est de 5 à 40 %, de préférence d'environ 20 %.

12. Pneumatique radial selon la revendication 10 ou 11, caractérisé en ce que le pli (5) de matériau en feuille ou en plaque étiré de la ceinture (4) présente une bande étroite (6') qui est enroulée sur la périphérie de la nappe plusieurs fois, éventuellement avec des zones de chevauchement ou de recouvrement réciproques.

13. Pneumatique radial selon la revendication 10 ou 11, caractérisé en ce que le pli (5) du matériau en feuille ou en plaque étiré de la ceinture (4) comporte une pluralité de bandes (6") juxtaposées dans la direction périphérique, espacées entre elles.

14. Pneumatique radial selon l'une des revendications 10 à 13, caractérisé en ce que la ceinture (4a) est à trois plis, le pli radialement le plus interne (10a) est un pli en nylon à 0°, le pli supérieur (10b) est un pli en aramide à 0° et le pli médian est un pli (5) en matériau de feuille ou de plaque étiré.

15. Pneumatique radial selon l'une des revendications 10 à 13, caractérisé en ce que la ceinture (4b) est à trois plis, la ceinture la plus interne radialement (12) est un pli en aramide à 0°, le deuxième pli est un pli (5) en matériau de feuille ou de plaque étiré et le troisième pli (12b) est un pli en nylon à 0° constitué par deux bandes s'étendant sur le côté de l'épaulement.
